Europäisches Patentamt

European Patent Office

Office européen des brevets

(19)

(11) Veröffentlichungsnummer: **0 033 389**
**B1**

(12) **EUROPÄISCHE PATENTSCHRIFT**

(45) Veröffentlichungstag der Patentschrift:
02.11.83

(21) Anmeldenummer: 80108122.5

(22) Anmeldetag: 22.12.80

(51) Int. Cl.³: **B 29 D 7/24**, B 29 D 7/22

(54) Vorrichtung zum Recken und/oder Normalisieren des Reckverhältnisses von thermoplastischen Kunststoffolien.

(30) Priorität: 31.01.80 DE 3003381

(43) Veröffentlichungstag der Anmeldung:
12.08.81 Patentblatt 81/32

(45) Bekanntmachung des Hinweises auf die Patenterteilung:
02.11.83 Patentblatt 83/44

(84) Benannte Vertragsstaaten:
AT BE CH DE FR GB IT LI LU NL SE

(56) Entgegenhaltungen:
AT - B - 326 601
DE - A - 1 460 639
DE - A - 1 504 059
DE - A - 1 504 647
DE - A - 1 957 708
DE - B - 1 221 000
DE - B - 1 704 728
US - A - 3 076 232
US - A - 3 503 843

(73) Patentinhaber: Ramisch Kleinewefers GmbH, Neuer
Weg 24-40, D-4150 Krefeld (DE)

(72) Erfinder: Friz, Werner, Ing. grad., Buschdonk 1,
D-4150 Krefeld (DE)

(74) Vertreter: Stark, Walter, Dr.-Ing., Moerser Strasse 140,
D-4150 Krefeld (DE)

## Vorrichtung zum Recken und/oder Normalisieren des Reckverhältnisses von thermoplastischen Kunststoffolien

Die Erfindung betrifft eine Vorrichtung zum Recken und/oder Normalisieren des Reckverhältnisses von thermoplastischen Kunststoffen mit einer Vorheizzone, einer Reckzone und einer Kühlzone, wobei in der Vorheizzone eine oder mehrere parallelachsige Temperierwalzen, in der Reckzone parallelachsig zu den Temperierwalzen Heizwalzen und in der Kühlzone eine oder mehrere zu den übrigen Walzen parallelachsige Kühlwalzen angeordnet sind, über die die Kunststoffolie bei wechselweiser und teilweiser Umschlingung geführt ist.

Mit derartigen Vorrichtungen (US-PS 3 076 232) lassen sich die physikalischen und technologischen Eigenschaften vieler thermoplastischer Kunststoffe verbessern. In diesem Zusammenhang ist es bekannt, die Kunststoffe entweder nur in einer Richtung zu recken oder biaxial nacheinander bzw. simultan zu recken. Das Recken der Kunststoffolie in Längsrichtung der Folie erfolgt meistens mit Hilfe von Walzen, über die die Folie unter Zugspannung geführt wird. Zum Recken der Kunststoffolie quer zur Längsrichtung kennt man Breitstreckmaschinen mit endlos umlaufenden Spannketten, an denen Kluppen befestigt sind, die die Folie am Einlauf seitlich erfassen und sie beim Durchgang durch die Maschine in die Breite recken. Dabei ergeben sich jedoch Probleme im Hinblick auf die Halterung der Folie in den Kluppen. Ausserdem ist der konstruktive Aufwand einer solchen Maschine mit Kluppen und Ketten erheblich.

Ganz allgemein besteht das Problem, Kunststoffolien, die z.B. von einem Ziehkalander heiss über nachfolgende Temperierwalzen und Kühlwalzen abgezogen und einer Aufwickelvorrichtung zugeführt werden, bezüglich ihrer physikalischen und technologischen Eigenschaften so einzustellen, dass sie bestimmten Qualitätsgarantien genügen. Eine solche Behandlung der Kunststoffolien ist nämlich naturgemäss stets mit einer Längsreckung verbunden. Diese Längsreckungen bereiten bei der weiteren Veredelung der Folien erhebliche Schwierigkeiten, weil vorgeschriebene Qualitätsgarantien in der Regel festlegen, welche Dimensionsveränderungen unter definierter Wärmeeinwirkung die entsprechenden Folien bzw. die daraus hergestellten Fertigprodukte haben dürfen.

Arbeitet man mit Vorrichtung herkömmlicher Art, dann lassen sich derartig exakt definierte physikalische und technologische Eigenschaften mit einem wirtschaftlich vertretbaren Aufwand kaum oder gar nicht erreichen.

Im übrigen kennt man Breitstreckwalzen aus einem um eine feste Achse drehbaren Rohrkörper, der an seinem Umfang mehrere zueinander parallele axiale Nuten aufweist, in die elastische Schnüre eingezogen sind, welche an Spannscheiben an den Enden des Rohrkörpers gehalten sind (DE-OS 1 460 639). Mit einer solchen Breitstreckwalze kann die Breite einer darübergeführten Kunststoffolie verändert werden.

Aufgabe der Erfindung ist es, eine Vorrichtung der eingangs beschriebenen Gattung anzugeben, mit der sich exakt definierte physikalische und technologische Eigenschaften, insbesondere ein definiertes Reckverhältnis, an thermoplastischen Kunststoffolien einstellen lässt.

Diese Aufgabe wird mit einer Vorrichtung der eingangs beschriebenen Gattung dadurch gelöst, dass in der Reckzone Breitstreckwalzen parallelachsig zu- und abwechselnd mit den Heizwalzen angeordnet sind.

Bei der erfindungsgemässen Vorrichtung wird die Kunststoffolie nicht wie bei bekannten Vorrichtungen freitragend durch eine mit Heissluft beaufschlagte Kammer, sondern über eine Temperierwalze geführt, auf der die Kunststoffolie bis in den Erweichungsbereich erwärmt werden kann. Die Temperierwalze kann wie üblich mit einem Heizmedium, z.B. Heisswasser oder Heissöl durchströmt sein und dadurch auf eine exakte thermoplastische Temperatur aufgeheizt werden. Die so vorgewärmte Kunststoffolie wird über wenigstens eine Breitstreckwalze geführt und dabei in die Breite gestreckt. Die Breitenstreckung wird so eingestellt, dass dabei die in der Kunststoffolie vorhandene Längsstreckung aufgelöst wird bzw. das Reckverhältnis in beiden Richtungen normalisiert wird. Auf einer nachgeschalteten Heizwalze kann die Kunststoffolie dann auf eine geringere Temperatur gebracht und dadurch der so erreichte Zustand gleichsam eingefroren werden. Der Vorgang kann mit einer oder mehreren Gruppen von Breitstreckwalzen und Heizwalzen wiederholt werden, bis die Kunststoffolie schliesslich über eine Kühlwalze geführt, dort abgekühlt und an eine Aufwickelvorrichtung weitergegeben wird.

Mit der erfindungsgemässen Vorrichtung ist es grundsätzlich möglich, entweder den Reckzustand der Folie zu normalisieren, so dass die Folie bei einer späteren Wärmebehandlung in allen Richtungen gleichmässig schrumpft, oder einen vorgegebenen Reckzustand mit überwiegender Längsreckung oder überwiegender Querreckung einzustellen, wenn das gewünscht wird. Im letzteren Fall muss die Folie innerhalb der Vorrichtung aber bestimmten Längskräften ausgesetzt werden.

Die Vorrichtung ist sehr einfach aufgebaut, denn sie besteht im wesentlichen nur aus hintereinandergeschalteten Walzen, von denen in der Regel auch nur ein Teil angetrieben zu werden braucht. Die Walzen können alle in einer Ebene angeordnet sein. Zur Vergrösserung des Umschlingungswinkels einer Walze können Heizwalzen und Breitstreckwalzen aber auch höhenversetzt zueinander angeordnet sein.

Die Temperatur der Temperierwalzen, der Heizwalzen und der Kühlwalzen sollte gruppenweise oder einzeln unabhängig voneinander einstellbar sein. Dann kann nämlich im Sinne der oben erläuterten Funktionen das Reckverhältnis der zu bearbeitenden Folien stufenweise eingestellt werden.

Im übrigen sollten die Drehzahlen der Heizwalzen, der Kühlwalzen und gegebenenfalls der Breitstreckwalzen gruppenweise oder einzeln regelbar sein. Geht man nämlich davon aus, dass die Fläche der Folie beim Breitrecken konstant bleibt, dann verändert sich ihre Länge. Dementsprechend müssen die einer Breitstreckwalze nachgeschalteten Walzen langsamer laufen, um eine Breitreckung ohne Längsreckung zu ermöglichen. Andererseits kann durch gruppenweise oder einzelne Regelung bestimmter Walzen erreicht werden, dass gleichzeitig mit der Breitreckung auch eine Längsreckung eintritt, so dass auch eine definierte biaxiale Reckung mit dieser Vorrichtung erzeugt werden kann.

Soll lediglich das Reckverhältnis normalisiert werden, d.h. eine Breitreckung ohne Längsreckung erzeugt werden, dann empfiehlt es sich, die Drehzahlen der einer Breitstreckwalze nachgeschalteten Walzen in Abhängigkeit vom Reckverhältnis dieser Breitstreckwalze einzustellen. Sind mehrere einander nachgeordnete Breitstreckwalzen vorhanden, so gelten diese kinematischen Verhältnisse jeweils für die nachgeschalteten Walzen.

Besonders günstige Ergebnisse werden mit der erfindungsgemässen Vorrichtung erreicht, wenn sie mit einer Breitstreckwalze kombiniert ist, die aus einem um eine feste Achse drehbaren Rohrkörper besteht, der an seinem Umfang mehrere zueinander parallele axiale Nuten aufweist, in die elastische Schnüre eingezogen sind, welche an Spannscheiben an den Enden des Rohrkörpers gehalten sind, wobei wenigstens eine der Spannscheiben in eine Schräglage zur festen Achse verstellbar und in dieser Schräglage unabhängig von der Rotation des Rohrkörpers feststellbar ist. Eine solche Breitstreckwalze kann als Schleppwalze eingesetzt werden, die von der darüber geführten Kunststoffolie mitgenommen wird. Während der Rotation des Rohrkörpers verändert sich die Länge der elastischen Schnüre nach Massgabe des jeweiligen Drehwinkels, wobei im Laufe einer Umdrehung eine Verlängerung und anschliessend eine Verkürzung der Schnüre eintritt. Die Kunststoffolie wird über denjenigen Umfangsabschnitt gelegt, auf dem sich die Schnüre verlängern. Dadurch wird die gewünschte Breitstreckung erreicht.

Um auch ohne nennenswerte Längskräfte in der Kunststoffolie eine hinreichende Haftwirkung zwischen Kunststoffolie und Schnüren zu erreichen, wird im Bereich des Einlaufs der Kunststoffolie auf die Breitstreckwalze eine Ionisierungseinrichtung angeordnet, die ein elektrostatisches Feld zur Erzeugung von elektrostatischen Haftkräften liefert. Den beim Aufbau des elektrostatischen Feldes erforderlichen Gegenpol bilden elektrisch leitfähige und geerdete Einlagen in den Schnüren. Dann kann der Rohrkörper zur Vereinfachung des konstruktiven Aufbaus aus einem elektrischen nicht leitenden Material bestehen.

Bei einer bevorzugten Ausführungsform der Erfindung bestehen die Schnüre aus einem Mischpolymerisat aus Acryl-Nitryl, Butadien und Styrol (ABS) mit einer Einlage aus feinverteiltem Graphit. Das Mischpolymerisat ist bis zu Temperaturen von ca. 100°C temperaturbeständig und besitzt insoweit auch die erforderliche Dauerweckselfestigkeit, die durch die Graphiteinlage noch verbessert wird. Andererseits bildet die Graphiteinlage die elektrisch leitfähige Einlage zum Aufbau des elektrostatischen Feldes.

Es besteht auch die Möglichkeit, die elastischen Schnüre aus metallischen Spiralfedern und einem umgebenden Mantel aus einem temperaturbeständigen weichelastischen Material herzustellen. Der Mantel kann aus einem PTFE- oder Gummimaterial bestehen. Derartige Materialien sind bis über 100°C temperaturbeständig. Die metallischen Spiralfedern, insbesondere Stahlfedern, bringen bei hinreichender Dauerwechselfestigkeit die Rückstellkräfte auf und bilden gleichzeitig die elektrisch leitfähigen Einlagen für den Aufbau des elektrostatischen Feldes.

Im folgenden werden in der Zeichnung dargestellte Ausführungsbeispiele der Erfindung erläutert; es zeigen:

Fig. 1 in schematischer Darstellung einen Längsschnitt durch eine Vorrichtung zum Recken und/oder zum Normalisieren des Reckverhältnisses von thermoplastischen Kunststoffolien,

Fig. 2 eine andere Ausführungsform des Gegenstandes nach Fig. 1,

Fig. 3 in schematischer Darstellung eine Ansicht einer Breitstreckwalze,

Fig. 4 einen Schnitt in Richtung IV-IV durch den Gegenstand nach Fig. 3,

Fig. 5 in vergrösserter Darstellung und teilweise geschnitten einen Endabschnitt der Breitstreckwalze nach Fig. 3,

Fig. 6 teilweise geschnitten einen Abschnitt einer elastischen Schnur für die Breitstreckwalze nach Fig. 3,

Fig. 7 eine andere Ausführungsform des Gegenstandes nach Fig. 6.

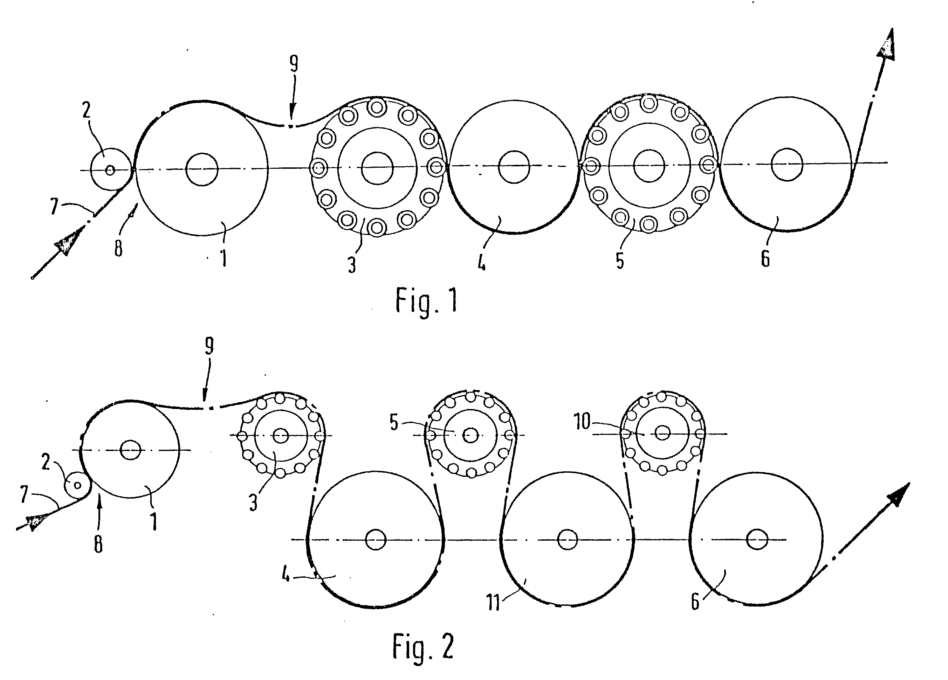

Die in Fig. 1 dargestellte Vorrichtung besteht in ihrem grundsätzlichen Aufbau aus einer Reihe von hintereinandergeschalteten parallelachsigen Walzen, deren Achsen jeweils in einer Ebene liegen. Im einzelnen handelt es sich dabei um eine Temperierwalze 1 mit vorgeschalteter Andruckrolle 2, einer Breitstreckwalze 3, einer dieser nachgeschalteten Heizwalze 4, einer weiteren Breitstreckwalze 5 und einer dieser nachgeschalteten Kühlwalze 6. Es können auch mehrere der dargestellten Walzen einzeln oder gruppenweise mehrfach hintereinander angeordnet sein.

Eine von einem Ziehkalander oder einem Wickel abgezogene Kunststoffolie 7 wird von unten durch den Spalt 8 zwischen Temperierwalze 1 und Andruckrolle 2 über die Oberseite der Temperierwalze 1 und von dort unter Bildung eines Durchhangs 9 auf die Oberseite der Breitstreckwalze 3 geführt. Die Kunststoffolie 7 gelangt von der Breitstreckwalze 3 auf die Unterseite der Heizwalze 4 und dann wieder auf die Oberseite der nachfolgenden Breitstreckwalze 5, von der die Kunststoffolie 7 an die nachgeschaltete Kühlwalze 6 übergeben wird, über deren Unterseite sie zu einer nicht dargestellten Wickelvorrichtung oder dergleichen geführt wird.

Beim Durchlauf der Kunststoffolie durch die Vorrichtung soll das Reckverhältnis der Kunststoffolie normalisiert werden, weil die vom Ziehkalander heiss abgezogene und über nachfolgende Temperier- und Kühlwalzen geführte Kunststoffolie stets Längsreckungen aufweist, die bei der weiteren Veredelung der Folie erhebliche Schwierigkeiten bereiten, insbesondere dann, wenn von den Fertigprodukten vorgeschriebene Qualitätsgarantien im Hinblick auf Dimensionsveränderungen unter definierter Wärmeeinwirkung verlangt werden. Beim Durchlauf durch die dargestellte Vorrichtung kann der Kunststoffolie, die im wesentlichen mit axialer Reckung längsorientiert ist, eine Querorientierung mit entsprechender Reckung überlagert werden, so dass das Reckverhältnis normalisiert und/oder die axiale Reckung eliminiert wird.

Dazu wird die Kunststoffolie 7 auf der Temperierwalze 1 auf eine exakt vorgegebene Temperatur im thermoplastischen Bereich aufgeheizt. Die Temperierwalze 1 ist, was im einzelnen nicht dargestellt ist, mit einem Heizmedium wie z.B. Heisswasser oder Heissöl innenseitig durchströmt und gibt ihre Wärme über die Oberfläche an die Kunststoffolie 7 ab.

Da die Kunststoffolie 7, wenn sie die Temperierwalze 1 verlässt, sich im thermoplastischen Zustand befindet, bildet sich aufgrund ihres Eigengewichtes der Durchhang 9 aus.

Auf der nachfolgenden Breitstreckwalze 3, deren Aufbau im einzelnen weiter unten erläutert werden wird, wird die Kunststoffolie 7 auf ihrem Umschlingungsweg von weniger als 180° zwischen Einlauf und Auslauf progressiv und definiert um einen bestimmten Betrag in Querrichtung gestreckt. Wenn man davon ausgeht, dass die Fläche der Kunststoffolie 7 beim Breitstrecken konstant bleibt, dann ändert sich ihre Länge bzw. die bei den vorangehenden Bearbeitungsvorgängen entstandene Längsstreckung.

Um eine weitere Längsstreckung zu vermeiden, werden die der Breitstreckwalze 3 nachgeschalteten Walzen mit einer entsprechend geringeren Geschwindigkeit angetrieben. Es versteht sich, dass diese kinematischen Verhältnisse auch für alle Walzen gilt, die einer weiteren Breitstreckwalze, z.B. der Breitstreckwalze 5, nachgeschaltet sind. Die Einstellung der Drehzahlen dieser Walzen erfolgt mit Hilfe nicht dargestellter Steuer- oder Regelkreise oder Getriebe.

Die der Breitstreckwalze 3 nachgeschaltete Heizwalze 4 wird mit einem zirkulierenden Heizmedium wie Heisswasser oder Heissöl innenseitig durchströmt und gibt ihre Wärme über die Oberfläche an die Kunststoffolie 7 ab. Die Temperatur der Heizwalze 4 ist geringer eingestellt als die Temperatur der Temperierwalze 1, so dass die auf der Breitwalze 3 erreichte Breitstreckung der Kunststoffolie 7 im Bereich der Heizwalze 4 praktisch eingefroren wird. Es besteht aber auch die Möglichkeit, die Temperatur der Heizwalze 4 so zu steuern, dass den nachfolgenden Walzen eine Kunststoffolie im halbelastischen Bereich übergeben wird, die in der Lage ist, die durch diese nachgeschalteten Walzen erzeugten Längskräfte aufzunehmen bzw. auszugleichen.

Beim dargestellten Ausführungsbeispiel wird die Kunststoffolie 7 noch einmal über eine Breitstreckwalze 5 geführt, um verbleibende Restdehnung auszugleichen und das Reckverhältnis optimal einzustellen. Im Bereich der Kühlwalze 6 schliesslich wird die Kunststoffolie 7 abgekühlt, so dass der erhaltene Reckzustand praktisch eingefroren wird. Anschliessend kann die Folie aufgewickelt werden. Wenn mehrere Gruppen von Temperierwalzen, Heizwalzen und Kühlwalzen vorgesehen sind, sollte die Möglichkeit bestehen, die Temperatur dieser Walzen gruppenweise oder einzeln unabhängig voneinander einzustellen. Um eine Anpassung an unterschiedliche Eigenschaften verschiedener Folien zu ermöglichen, sollten auch die Drehzahlen der angetriebenen Walzen gruppenweise oder einzeln regelbar sein.

Bei der in Fig. 1 dargestellten Vorrichtung sind die Achsen sämtlicher Walzen in einer Ebene angeordnet, wobei Breitstreckwalzen und Heizwalzen so dicht nebeneinander angeordnet sind, dass zwischen ihnen lediglich ein den Durchtritt der Kunststoffolie 7 ermöglichender Spalt verbleibt.

Bei der in Fig. 2 dargestellten Vorrichtung bezeichnen gleiche Bezugszeichen gleiche Teile. Hier sind die Walzen gruppenweise in unterschiedlichen Ebenen angeordnet. Insgesamt sind drei Breitstreckwalzen 3, 5 und 10 in einer Ebene oberhalb der beiden Heizwalzen 4 und 11 sowie der Kühlwalze 6 angeordnet. Das bietet die Möglichkeit, den Umschlingungswinkel der Kunststoffolie 7 auf diesen Walzen zu vergrössern.

Mit den beschriebenen Vorrichtungen ist es ohne weiteres möglich, die Kunststoffolie so zu behandeln, dass sie nach Verlassen der Walzen ein bestimmtes vorgegebenes Reckverhältnis mit überwiegender Längsreckung oder überwiegender Querreckung besitzt. Dazu ist es lediglich erforderlich, die angetriebenen Walzen, z.B. die Heizwalzen 4, 11 und die Kühlwalze 6 so anzutreiben, dass zusätzlich Längskräfte in die Kunststoffolie eingebracht werden. Das ist mit den vorhandenen Regel- und Steuereinrichtungen möglich.

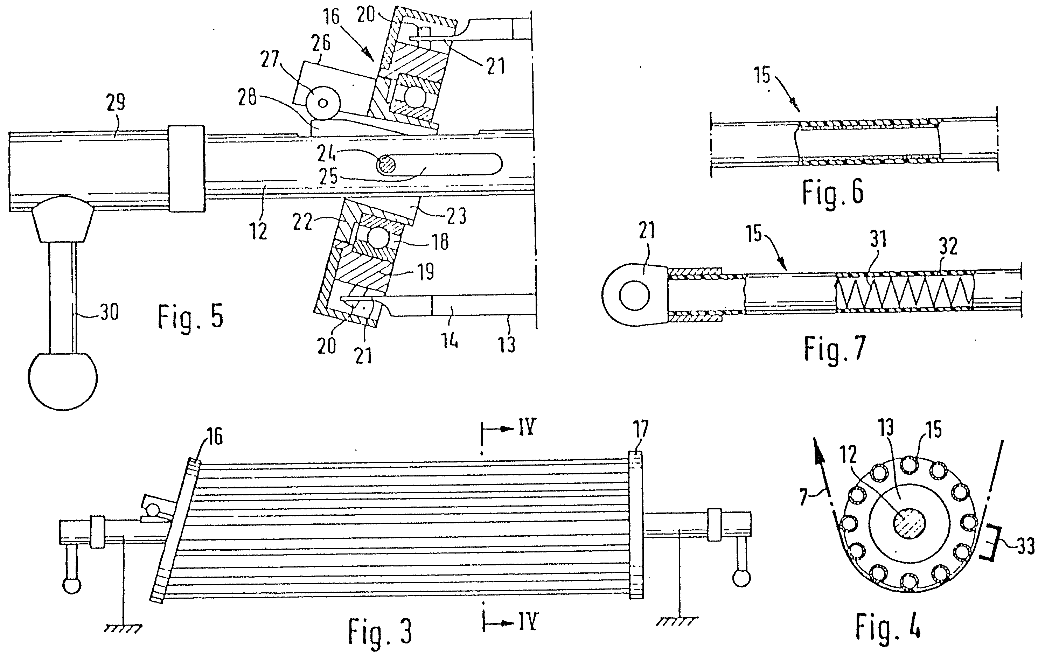

Die in den Figuren 3 bis 7 dargestellte Breitstreckwalze 3 besteht in ihrem grundsätzlichen Aufbau aus einem um eine feste Welle 12 drehbaren Rohrkörper 13, der an seinem Umfang mehrere zueinander parallele axiale Nuten 14 aufweist, in die elastische Schnüre 15 eingezogen sind. Die Nuten 14 besitzen ein hinterschnittenes Profil, so dass die Schnüre 15 auch bei hohen Drehzahlen des Rohrkörpers 13 und bei den dann auftretenden Zentrifugalkräften nicht aus den Nuten 14 austreten können. Andererseits ist die Anordnung der Schnüre in den Nuten 14 aber so, dass die Schnüre 15 zumindest teilweise über die Oberfläche des Rohrkörpers 13 vorstehen (Fig. 4).

An jedem Ende des Rohrkörpers 13 ist auf der Welle 12 jeweils eine Taumelscheibe 16, 17 gelagert. Die Taumelscheiben 16, 17 sind identisch ausgebildet, so dass es genügt, eine zu beschreiben. Jede Taumelscheibe 16 bzw. 17 weist einen mit seiner Innenseite auf einem Kugellager 18 laufenden Ring 19 auf, der aussenseitig mehrere radial vorstehende Zapfen 20 trägt. Die Anzahl der Zapfen 20 entspricht der Anzahl der Nuten 14. Auf die Zapfen 20 sind beim dargestellten Ausführungsbeispiel Ösen 21 an den Enden der elastischen Schnüre 15 aufgeschoben. Die elastischen Schnüre 15 können aber auch zu einer einzigen durchgehenden Schnur vereinigt sein, die abwechselnd von links nach rechts und wieder zurück über den Mantel des Rohrkörpers 13 und um die Zapfen 20 herumgeführt ist.

Das Kugellager 18 sitzt innenseitig auf einem Laufkranz 22, der eine Durchgangsöffnung 23 für die Welle 12 besitzt. Die Durchgangsöffnung 23 ist erheblich grösser als der Durchmesser der Welle 12, so dass der Laufkranz 22 relativ zur Welle 12 wie dargestellt verschwenkt werden kann. Die Durchgangsöffnung 23 ist von einem Schwenkzapfen 24 durchsetzt, der sich durch einen Längsschlitz 25 der Welle 12 erstreckt. Ferner besitzt der Laufkranz 22 einen Arm 26, der in Längsrichtung der Welle 12 nach aussen vorspringt und eine Gleitrolle 27 trägt. Im Bereich der Gleitrolle 27 befindet sich auf der Welle 12 und mit dieser fest verbunden ein Keil 28.

Der Schwenkzapfen 24 sitzt am Ende einer nicht dargestellten, innerhalb der Welle 12 in Längsrichtung geführten Spindel, die sich bis in eine am Ende der Welle 12 axial unverschieblich, jedoch drehbar gehaltene Spindelmutter 29 erstreckt. Ein Handgriff 30 an der Spindelmutter 29 ermöglicht die axiale Verstellung der Spindel und damit des Schwenkzapfens 24. Mit dem Schwenkzapfen 24 wird auch der Laufkranz 22 in axialer Richtung verstellt, wobei der Arm 26 mit der Gleitrolle 27 sich auf dem Keil 28 abstützt. Je nach Verstellung wird dadurch eine Verschwenkung der Taumelscheibe 16 bzw. 17 erreicht.

Beim dargestellten Ausführungsbeispiel besteht der Rohrkörper 13 aus einem elektrisch nicht leitendem Material. Die elastischen Schnüre 15 können entweder aus einem Mischpolymerisat aus Acryl-Nitryl, Butadien und Styrol (ABS) mit einer Einlage aus feinverteiltem Graphit (Fig. 6) oder aus metallischen Spiralfedern 31 und einem umgebenden Mantel 32 aus temperaturbeständigem weichelastischem PTFE- bzw. einem Gummimaterial bestehen (Fig. 7). Die verwendeten Materialien sind bis ca. 100°C und darüber temperaturbeständig und dauerelastisch.

Die Einlage aus feinverteiltem Graphit bei den Schnüren aus Mischpolymerisat soll nicht nur die mechanischen Eigenschaften verbessern, sondern auch, ebenso wie die Einlage aus metallischen Spiralfedern 31, elektrische Leitfähigkeit gewährleisten. Elektrische Leitfähigkeit ist immer dann erwünscht, wenn zusätzliche Haltekräfte zwischen der Folie und der Breitstreckwalze erforderlich sind. Dazu wird nämlich die Folie vor dem Einlauf in die Breitstreckwalze an einer Ionisierungseinrichtung 33 vorbeigeführt, die bei geerdeten elektrischen Leitern eine elektrostatische Aufladung mit dem Ergebnis bewirkt, dass die Kunststoffolie 7 auf der Breitstreckwalze zusätzlich durch elektrostatische Kräfte gehalten wird. Dann kann die Breitstreckwalze im Rahmen der eingangs beschriebenen Vorrichtung als Schleppwalze angeordnet sein, ohne dass die Kunststoffolie durch nennenswerte Längskräfte belastet wird.

Es versteht sich, dass die Breitstreckwalze auch unabhängig von der beschriebenen Vorrichtung zum Breithalten oder Breiten von durchlaufenden Materialbahnen eingesetzt werden kann.

**Patentansprüche**

1. Vorrichtung zum Recken und/oder Normalisieren des Reckverhältnisses von thermoplastischen Kunststoffolien mit einer Vorheizzone, einer Reckzone und einer Kühlzone, wobei in der Vorheizzone eine oder mehrere parallelachsige Temperierwalzen (1), in der Reckzone parallelachsig zu den Temperierwalzen (1) Heizwalzen (4, 11) und in der Kühlzone eine oder mehrere zu den übrigen Walzen parallelachsige Kühlwalzen (6) angeordnet sind, über die die Kunststoffolie (7) bei wechselweiser und teilweiser Umschlingung geführt ist, dadurch gekennzeichnet, dass in der Reckzone Breitstreckwalzen (3, 5, 10) parallelachsig zu- und abwechselnd mit den Heizwalzen (4, 11) angeordnet sind.

2. Vorrichtung nach Anspruch 1, dadurch gekennzeichnet, dass die Heizwalzen (4, 11) und die Breitstreckwalzen (3, 5, 10) höhenversetzt zueinander angeordnet sind.

3. Vorrichtung nach Anspruch 1 oder 2, dadurch gekennzeichnet, dass die Temperatur der Temperierwalzen (1), der Heizwalzen (4, 11) und der Kühlwalzen (6) gruppenweise oder einzeln unabhängig voneinander einstellbar sind.

4. Vorrichtung nach einem der Ansprüche 1 bis 3, dadurch gekennzeichnet, dass die Drehzahlen der Heizwalzen (4, 11), der Kühlwalzen (6) und ggf. der Breitstreckwalzen (3, 5, 10) gruppenweise oder einzeln regelbar sind.

5. Vorrichtung nach einem der Ansprüche 1 bis 4, dadurch gekennzeichnet, dass die Drehzahlen der einer Breitstreckwalze (3, 5, 10) nachgeschalteten Walzen in Abhängigkeit vom Reckverhältnis dieser Breitstreckwalze einstellbar sind.

6. Vorrichtung nach einem der Ansprüche 1 bis 5, mit einer Breitstreckwalze (3, 5, 10) aus einem um eine feste Achse drehbaren Rohrkörper (13), der an seinem Umfang mehrere zueinander parallele axiale Nuten (14) aufweist, in die elastische Schnüre (15) eingezogen sind, welche an Spannscheiben (16, 17) an den Enden des Rohrkörpers (13) gehalten sind, wobei wenigstens eine der Spannscheiben (16, 17) in eine Schräglage zur festen Achse verstellbar und in dieser Schräglage unabhängig von der Rotation des Rohrkörpers (13) feststellbar ist, dadurch gekennzeichnet, dass die elastischen Schnüre (15) eine Einlage aus elektrisch leitfähigem Material aufweisen und dass der Rohrkörper (13) aus einem elektrisch nicht leitenden Material besteht.

7. Vorrichtung nach Anspruch 6, dadurch gekennzeichnet, dass die Schnüre (15) aus einem Mischpolymerisat aus Acryl-Nitryl, Butadien und Styrol (ABS) mit einer Einlage aus feinverteiltem Graphit bestehen.

8. Vorrichtung nach Anspruch 6, dadurch gekennzeichnet, dass die elastischen Schnüre (15) aus metallischen Spiralfedern (31) und einem umgebenden Mantel (32) aus einem temperaturbeständigen weichelastischen Material bestehen.

9. Vorrichtung nach Anspruch 8, dadurch gekennzeichnet, dass der Mantel (32) aus einem PTFE-Material besteht.

10. Vorrichtung nach Anspruch 8, dadurch gekennzeichnet, dass der Mantel (32) aus einem Gummimaterial besteht.

11. Vorrichtung nach einem der Ansprüche 6 bis 10, dadurch gekennzeichnet, dass die Schnüre (15) bzw. deren elektrischleitenden Einlagen geerdet sind.

## Revendications

1. Dispositif pour étirer et/ou normaliser la proportion d'étirage de feuilles de matière thermoplastique comportant une zone de préchauffage, une zone d'étirage et une zone de refroidissement, un ou plusieurs rouleaux d'équilibrage de température (1) à axes parallèles étant disposés dans la zone de préchauffage, des rouleaux de chauffage (4, 11) étant disposés dans la zone d'étirage et leurs axes étant parallèles à ceux des rouleaux d'équilibrage de température (1), et un ou plusieurs rouleaux de refroidissement (6) étant disposés dans la zone de refoidissement, leurs axes étant parallèles à ceux des autres rouleaux, la feuille de matière synthétique (7) étant guidée sur les rouleaux de refroidissement avec enlacement alternatif et partiel, caractérisé en ce que dans la zone d'étirage sont disposés des rouleaux élargisseurs (3, 5, 10), dont les axes sont parallèles à ceux des rouleaux de chauffage (4, 11), et qui alternant avec ceux-ci.

2. Dispositif selon la revendication 1, caractérisé en ce que les rouleaux de chauffage (4, 11) et les rouleaux élargisseurs (3, 5, 10) sont disposés avec décalage entre eux en hauteur.

3. Dispositif selon l'une des revendications 1 ou 2, caractérisé en ce que la température des rouleaux d'équilibrage de température (1), des rouleaux de chauffage (4, 11) et des rouleaux de refroidissement (6) est règlable indépendamment, par groupes ou individuellement.

4. Dispositif selon l'une des revendications 1 à 3, caractérisé en ce que les vitesses de rotation des rouleaux de chauffage (4, 11), des rouleaux de refroidissement (6) et éventuellement des rouleaux élargisseurs (3, 5, 10) sont règlables par groupes ou individuellement.

5. Dispositif selon l'une des revendications 1 à 4, caractérisé en ce que les vitesses de rotation des rouleaux placés à la suite d'un rouleau élargisseur (3, 5, 10) sont règlables sous la dépendance du rapport d'étirage de ce rouleau élargisseur.

6. Dispositif selon l'une des revendications 1 à 5, comportant un rouleau élargisseur (3, 5, 10) formé d'un corps tubulaire (13) pouvant tourner autour d'un axe fixe, et qui présente à sa circonférence plusieurs rainures axiales (14) parallèles entre elles, dans lesquelles sont insérés des cordons élastiques (15), qui sont retenus sur des disques tendeurs (16, 17) aux extrémités du corps tubulaire (13), au moins un des disques tendeurs (16, 17) pouvant être réglé à une position oblique relativement à l'axe fixe et pouvant être fixé dans cette position oblique indépendamment de la rotation du corps tubulaire (13), caractérisé en ce que les cordons élastiques (15) présentent une armature de matière conductrice de l'électricité, et en ce que le corps tubulaire (13) est formé d'une matière non conductrice de l'électricité.

7. Dispositif selon la revendication 6, caractérisé en ce que les cordons (15) sont formés d'un produit de copolymérisation d'acrylonitrile, de butadiène et de styrène (ABS) avec une armature de graphite finement divisé.

8. Dispositif selon la revendication 6, caractérisé en ce que les cordons élastiques (15) sont formés de ressorts à boudin métalliques (31) et d'une enveloppe (32) de matière élastique molle résistant à la température, qui les entoure.

9. Dispositif selon la revendication 8, caractérisé en ce que l'enveloppe (32) est formée d'un PTFE.

10. Dispositif selon la revendication 8, caractérisé en ce que l'enveloppe (32) est formée d'un caoutchouc.

11. Dispositif selon l'une des revendications 6 à 10, caractérisé en ce que les cordons (15) ou leurs armatures conductrices de l'électricité sont reliés à la terre.

## Claims

1. Apparatus for stretching and/or normalizing the stretching ratio of thermoplastic synthetic foils with a preheating zone, a stretching zone, and a cooling zone, wherein one or more axially parallel tempering rollers (1) are disposed in the preheating zone, heating rollers (4, 11) are disposed in the stretching zone axially parallel to the tempering rollers (1), and one or more cooling rollers (6) axially parallel to the other rollers are disposed in the cooling zone, over which rollers the synthetic foil (7) is guided with alternate and partial wrapping round, characterized in that in the stretching zone breadth stretching rollers (3, 5, 10) are disposed in an axially parallel manner with respect to, and alternating with, the heating rollers (4, 11).

2. Apparatus according to claim 1, characterized in that the heating rollers (4, 11) and the breadth stretching rollers (3, 5, 10) are disposed such that they are offset with respect to one another in terms of height.

3. Apparatus according to claim 1 or 2, characterized in that the temperatures of the tempering rollers (1), the heating rollers (4, 11), and the cooling rollers (6) are adjustable by groups or individually independently of one another.

4. Apparatus according to any one of claims 1 to 3, characterized in that the speeds of the heating rollers (4, 11), the cooling rollers (6), and, if necessary, the breadth stretching rollers (3, 5, 10) are regulable by groups or individually.

5. Apparatus according to any one of claims 1 to 4, characterized in that the speeds of the rollers downstream of a breadth stretching roller (3, 5, 10) are adjustable in dependence upon the stretching ratio of this breadth stretching roller.

6. Apparatus according to any one of claims 1 to 5, with a breadth stretching roller (3, 5, 10) comprising a tubular body (13) which is rotatable about a fixed axis and comprises on its periphery a plurality of axial grooves (14) which are parallel to one another and into which resilient lines (15) are threaded which are retained on clamping discs (16, 17) at the ends of the tubular body (13), at least one of the clamping discs (16, 17) being adjustable into an oblique position with respect to the fixed axis and being securable in this oblique position independently of the rotation of the tubular body (13), characterized in that the resilient lines (15) include electrically conductive material and the tubular body (13( consists of an electrically non-conductive material.

7. Apparatus according to claim 6, characterized in that the lines (15), consist of a copolymer of acrylonitrile, butadiene, and styrene (ABS) including fine particles of graphite.

8. Apparatus according to claim 6, characterized in that the resilient lines (15) consist of metal spiral springs (31) and a surrounding casing (32) of a temperature-stable weakly resilient material.

9. Apparatus according to claim 8, characterized in that the casing (32) consists of a PTFE material.

10. Apparatus according to claim 8, characterized in that the casing (32) consists of a rubber material.

11. Apparatus according to any one of claims 6 to 10, characterized in that the lines (15) or their resiliently conductive components are eárthed.

Fig. 1

Fig. 2

0 033 389

Fig. 5

Fig. 6

Fig. 7

Fig. 3

Fig. 4

0 033 389